# EUROPEAN PATENT APPLICATION

(11) **EP 2 901 898 A1**
(43) Date of publication of application: **05.08.2015**
(21) Application number: 14152995.8
(22) Date of filing: 29.01.2014
(51) Int. Cl.: A47G 21/10, A47J 43/28

(54) **Food utensils**

(71) Applicant: Fiskars Home Oy Ab, 00560 Helsinki (FI)
(72) Inventor: Savolainen, Heikki, 00560 Helsinki (FI)
(74) Representative: Kolster Oy Ab

(57) **Abstract**

The invention relates to food utensils (1, 2) comprising a first food utensil (1) with an elongated handle (3) and a contact surface (4) for contacting food, and a second food utensil (2) with an elongated handle (3) and a contact surface (4) for contacting food. In order to provide food utensils capable of being used more efficiently than previously the first food utensil (1) is provided with a first attachment section (5), the second food utensil (2) is provided with a second attachment section (6), and the first (5) and second (6) attachment sections are shaped as counterparts allowing the first food utensil (1) and the second food utensil (2) to be attached to each other for obtaining a pair of tongs and allowing the first food utensil and the second food utensil to be detached from each other in order to be used separately from each other.

## Description

### BACKGROUND OF THE INVENTION

### FIELD OF THE INVENTION

This invention relates to "food utensils", in other words to tools suitable for handling food at any stage, such as for handling food during cooking or for handling food during serving, in other words for picking food after cooking from a bowl, kettle or a frying pan in order to place it on a plate, for instance.

### DESCRIPTION OF PRIOR ART

Previously there are known food utensils having an elongated handle and a contact surface in a first end of the handle for contacting food during use of the food utensil. Such a food utensil may be used alone like a spoon, for instance, in order to handle food. However, it is also possible to utilize two such separate food utensils simultaneously, such as when picking salad from a bowl. In that case the user places salad between the two separate food utensils and presses the contact surfaces of the food utensils towards each other in order to ensure that the salad does not fall off the food utensils by mistake.

A problem with food utensils as described above is that occasionally they are clumsy and cumbersome to use. More particular, the user is often forced to use both hands in order to efficiently utilize the two separate food utensils.

Previously there are also known tongs suitable for being operated with one hand only in order to handle food. However, such a tong cannot be used in any other way than as a tong. If the kitchen is provided with a tong the number of devices needed for handling food increases, as there are many occasions where a tong is not suitable for handling food, and in addition to a tong a one or more food utensils are needed.

### SUMMARY OF THE INVENTION

An object is to solve the above mentioned drawback and to provide food utensils capable of being used more efficiently than previously. This and other objects are achieved with the food utensils of independent claim 1.

The use of food utensils having counterpart attachment sections in second ends of the handles makes it possible to attach the first and second food utensil to each other for obtaining a pair of tongs. Therefore the first and second food utensil may be used separately for handling food, or alternatively, they may be connected into a pair of tweezers such that the user can easily handle them with one hand only. If the user has available several different food utensils with differently shaped contact surfaces but with attachment sections shaped as counterparts, the user may select depending on the instant need which food utensils the user wants to attach to each other at a particular moment.

Preferred embodiments of the invention are disclosed in the dependent claims.

### BRIEF DESCRIPTION OF DRAWINGS

In the following the present invention will be described in closer detail by way of example and with reference to the attached drawings, in which
Figures 1 to 5 illustrate a first embodiment of food utensils, and
Figures 6a to 6c illustrate alternative embodiments of food utensils.

### DESCRIPTION OF AT LEAST ONE EMBODIMENT

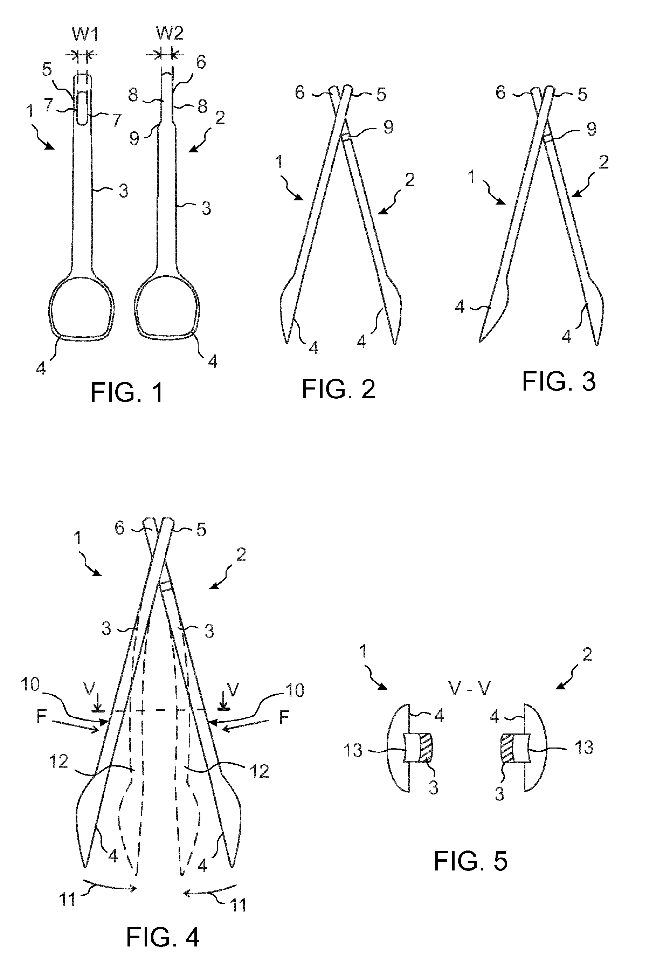

Figures 1 to 5 illustrate a first embodiment of food utensils. Figure 1 illustrates the first 1 and second 2 food utensils separately, Figure 2 and 3 illustrates the first 1 and second 2 food utensils attached to each other, Figure 4 illustrates the first 1 and second 2 food utensils as a pair of tongs, and Figure 5 is a cross section of the handles of the first 1 and second 2 food utensils.

The first 1 and second 2 food utensils comprises an elongated handle 3 having a contact surface 4 in a first end of the handle 3. The first food utensil 1 comprises a first attachment section 5 in a second end of the handle 3 and the second food utensil 2 comprises a second attachment section 6 in a second end of the handle 3. The first 5 and second 6 attachment sections are shaped as counterparts allowing the first food utensil 1 and the second food utensil 2 to be attached to each other in order to obtain a pair of tongs (or tweezers), as illustrated in Figures 2 and 3. Consequently, the first 1 and second 2 food utensils may be detached from each other in order to be used separately from each other for handling food, or alternatively, attached to each other in order to be used together as a pair of tongs.

In the illustrated example the first attachment section 5 of the first food utensil 1 comprises a hole extending completely through the first attachment section 5. The second attachment section 6 of the second food utensil 2 comprises a protrusion. Attachment of the first 1 and second 2 food utensils can be achieved by threading the protrusion through the hole in order to position the first 1 and second 2 food utensils in the positions illustrated in Figures 2 and 3.

One alternative to ensure that the first 1 and second 2 food utensils remain sufficiently attached to each other is to utilize friction in the attachment. In that case one or both of the food utensils 1 and 2 may have handles manufactured of a plastic material, such as a heat resistant plastic material. Polyamide (PA) possibly reinforced with glass fibers is an example of a suitable material. In order to obtain a sufficient amount of friction in an embodiment where the first food utensil 1 comprises a hole with a predetermined width W1 in the first attachment section 5 and the second food utensil comprises a protrusion in the second attachment section 6, is to dimension the width W2 of the protrusion to substantially correspond to the predetermined width W1 of the hole or to be slightly larger than the predetermined width W1 of the hole. In this way some elastic yielding in the material of the first 5 and/or second 6 attachment section is needed in order to thread the protrusion into the hole. This ensures a firm attachment between the first 1 and second 2 food utensils.

In practical tests with handles 3 manufactured of heat resistant plastic material a firm attachment has been obtained with a hole having a predetermined width W1 in the range of 12 - 20 mm when the width of the protrusion was 0.5 mm larger. Therefore the width W2 is preferably dimensioned to be 0 - 8% larger than the predetermined width W1.

In the illustrated example the hole in the first attachment section 5 is implemented as an elongated groove with rounded ends. The parallel opposite side walls 7 of the hole together with the parallel outer edges 8 of the protrusion in the second attachment section 6 ensure that the first 1 and second 2 food utensils remain in a correct mutual position while they are connected to a pair of tongs. Additionally, the second utensil 2 comprises a shoulder 9 preventing other parts of the second food utensil 2 than the protrusion from being threaded through the hole. Therefore only the protrusion with a smaller width W2 than the width of other parts of the handle 3 can pass through the hole. In this way it can be ensured that the contact surfaces 4 of the first 1 and second 2 food utensils are actually correctly located in relationship to each other and move towards each other once the food utensils are attached to each other and used as a tong, as illustrated in Figure 4.

The first 5 and second 6 attachment sections are preferably symmetrically shaped for allowing the first food utensil 1 to be attached to the second food utensil 2 in two alternative positions. Figure 2 illustrates the first position where the contact surfaces 4 of the first 1 and second 2 food utensils are facing each other. Figure 3 illustrates the second position, where the first food utensil 1 has been rotated 180° around its longitudinal axis, as compared to the situation in Figure 2, before being attached to the second food utensil 2. Therefore, in the second position the contact surface 4 of the first food utensil 1 faces away from the second food utensil 2. Attachment of the food utensils 1 and 2 into the first position illustrated in Figure 2 may be advantageous in order to move food by enclosing it between two concave contact surfaces 4, such as when picking salad from a bowl in order to place it on a plate, for instance. Attachment of the food utensils 1 and 2 into the second position illustrated in Figure 3 may be advantageous in order to move or turn around fish fillets in a frying pan, for instance.

Figure 4 illustrates the use of the first 1 and second 2 food utensils as a tong in more details. The food utensils are attached to each other similarly as in Figure 2. The user grips gripping sections 10 located between the first and second ends of the handles 3 with one hand and presses the gripping sections 10 of the handles 3 towards each other with a force F. Due to the fact that at least one of the first and second food utensils has a handle 3 dimensioned to yield elastically the contact surfaces 4 of the food utensils can come into contact with each other even though the attachment sections 5 and 6 may be implemented such that no mutual rotation or pivoting takes place between the attachment sections 5 and 6. In the illustrated embodiment it is assumed that both handles are of a material (such as a heat resistant plastic) that yields elastically. Therefore, the contact surfaces 4 move towards each other as illustrated by arrows 11 while the handles 3 yield into a shape illustrated by the dotted lines 12. Once the force F ends, in other words the use is no longer pressing the gripping sections 10 towards each other, the handles 3 return to their original shape, in other words straighten out, due to elasticity of the material.

Figure 5 illustrates a cross section of the handles 3 at the gripping section 10 along line V - V in Figure 4. From this cross section it can be seen that the outer surfaces of the gripping sections are provided with a respective longitudinal groove 13, in other words the outer surfaces have a concave shape. At least one of the utensils 1 or 2 is preferably provided with such a groove 13 in the outer surface, in other words in the surface which is located on the opposite side of the food utensil as compared to the contact surface 4. In this way the user will get a very good grip of the utensils while used as a pair of tongs, as the fingertips of the user may be received into this groove 13.

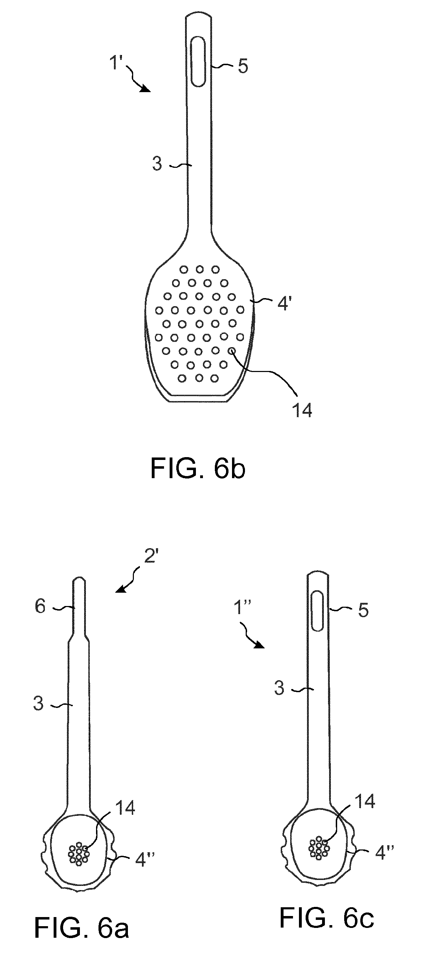

Figures 6a to 6c illustrate alternative embodiments of food utensils. The embodiment of Figures 6a to 6c is very similar to the one explained in connection with the embodiment of Figures 1 to 5. Therefore the embodiment of Figures 6a to 6c will be mainly explained by pointing out the differences.

In Figures 1 to 5 the food utensils 1 and 2 are provided with a generally concave contact surface 4. Such spoon shaped utensils may be utilized as a tong for handling salad, for instance, and separately from each other for handling rice, for instance.

In Figure 6a the contact surface is, however, generally flat. Such a food utensil 1' or spatula may be used for handling eggs in a frying pan, for instance. The contact surface 4' of the food utensil 1' may additionally (but not necessarily in all implementations) be provided with holes 14 extending through the food utensil 1'.

Though a differently shaped contact surface 4', the second end of the handle 3 comprises a first attachment section 5 which is similar as the one in the first food utensil 1 of Figure 1. Therefore the food utensil 1' may be attached to the second food utensil 2 of Figures 1 to 5 in the same way as has previously been explained regarding the first food utensil 1.

In Figures 6b and 6c the food utensils 2' and 1" have a concave contact surface 4" which is surrounded by toothed outer edges. Additionally the contact surface 4" is provided with holes 14 extending through the food utensils 2' and 1". Food utensils 2' and 1" may be utilized for handling pasta, for instance.

Though differently shaped contact surfaces 4" (as compared to the food utensils illustrated in Figures 1 to 6a) the second ends of the handles 3 have similar attachment sections 5 and 6 as in the previous embodiments. In other words, the food utensil 1 of Figure 1, the food utensil 1' of Figure 6a and the food utensil 1" of Figure 6c all have similar first attachment sections 5 and are therefore suitable for attaching to the food utensil 2 of Figure 1 or to the food utensil 2' of Figure 6b, which both have similar second attachment sections 6. This makes it possible to obtain a variety of differently shaped tongs by using the different food utensils in different combinations.

Instead of using only heat resistant plastic in the food utensils, the food utensils may be manufactured also from other materials. One alternative is to manufacture the handles of plastic and the contact surfaces of silicon, for instance. It is also possible to manufacture the food utensil of metal such as of steel, for instance. However, in case attachment between the utensils is implemented in such a way that yielding of the handle is necessary, at least one of the food utensils used in a pair of tongs is preferably manufactured of a sufficiently elastic material capable of yielding sufficiently by a force that a user may direct towards the gripping sections by one hand only.

It is to be understood that the above description and the accompanying figures are only intended to illustrate the present invention. It will be obvious to a person skilled in the art that the invention can be varied and modified without departing from the scope of the invention.

## Claims

1. Food utensils (1, 1', 1", 2, 2') comprising:
a first food utensil (1, 1', 1") with an elongated handle (3) and a contact surface (4, 4', 4") in a first end of the handle (3) for contacting food during use of the first food utensil, and
a second food utensil (2, 2') with an elongated handle (3) and a contact surface (4, 4") in a first end of the handle for contacting food during use of the second food utensil, **characterized in that**
the first food utensil (1, 1', 1") is provided with a first attachment section (5) in a second end of the handle,
the second food utensil (2, 2') is provided with a second attachment section (6) in a second end of the handle, and
the first (5) and second (6) attachment sections are shaped as counterparts allowing the first food utensil (1, 1', 1") and the second food utensil (2, 2') to be attached to each other for obtaining a pair of tongs and allowing the first food utensil and the second food utensil to be detached from each other in order to be used separately from each other.

2. The food utensils according to one of claim 1, wherein
the first first food utensil (1, 1', 1") comprises a hole extending through the first attachment section (5), and
the second attachment section (6) of the second food utensil (2, 2') comprises a protrusion for allowing the first and second food utensils to be attached to each other by threading the protrusion through the hole.

3. The food utensils according to claim 2, wherein
the hole has a predetermined width (W1), and
the protrusion has a width (W2) which substantially corresponds or is slightly larger than the predetermined width (W1) for allowing the first (1, 1', 1 ") and second (2, 2') food utensils to be attached to each other.

4. The food utensils according to claims 2 or 3, wherein the handle (3) of the second food utensil (2, 2') comprises a shoulder (9) preventing other parts of the second food utensil than the protrusion from being threaded through the hole.

5. The food utensils according to one of claims 1 to 4, wherein the handle (3) of at least one of the first (1, 1', 1 ") and second (2, 2') food utensils is dimensioned to yield elastically until the contact surfaces (4, 4', 4") of the food utensils attached to each other as a pair of tongs come into contact with each other by a force (F) that a user can direct towards the handles (3) of the food utensils with one hand.

6. The food utensils according to one of claims 1 to 5, wherein the handle (3) of at least one of the first (1, 1', 1 ") and second (2, 2') food utensils is made of heat resistant plastic.

7. The food utensils according to one of claims 1 to 6, wherein at least one of the first (5) and second (6) attachment sections is symmetrically shaped for allowing the first food utensil (1, 1', 1 ") to be attached to the second food utensil (2, 2') in two different positions, such that the contact surfaces (4, 4', 4") of the first (1, 1', 1") and second (2, 2') food utensils face each other in the first position, and the contact surface (4, 4', 4") of one of the of the first (1, 1', 1") and second (2, 2') food utensils faces away from the other food utensil in the second position.

8. The food utensils according to one of claims 1 to 7, wherein
the handle (3) of at least one of the first (1, 1', 1 ") and second (2, 2') food utensils comprises a gripping section (10) between the first end and the second end of the handle,
an outer surface of the gripping section (10) is provided with a longitudinal groove (13), and
the longitudinal groove (13) is located on an opposite side of the food utensil as compared to the contact surface (4, 4', 4").

9. The food utensils according to one of claims claim 1 to 8, wherein the contact surface (4) of at least one of the first and second food utensils is generally concave.

10. The food utensils according to one of claims claim 1 to 9, wherein the contact surface (4') of at least one of the first and second food utensils is generally flat.

11. The food utensils according to one of claims claim 1 to 10, wherein the contact surface (4', 4") of at least one of the first and second food utensils is provided with holes extending through the food utensil.

12. The food utensils according to one of claims claims 1 to 11, wherein the contact surface (4") of at least one of the first and second food utensils is surrounded by toothed outer edges.

## Amended claims

### Amended claims in accordance with Rule 137(2) EPC.

1. Food utensils (1, 1', 1", 2, 2') comprising:
a first food utensil (1, 1', 1") with an elongated handle (3) and a contact surface (4, 4', 4") in a first end of the handle (3) for contacting food during use of the first food utensil, and with a first attachment section (5) in a second end of the handle, and
a second food utensil (2, 2') with an elongated handle (3) and a contact surface (4, 4") in a first end of the handle for contacting food during use of the second food utensil, and with a second attachment section (6) in a second end of the handle, wherein
the first (5) and second (6) attachment sections are shaped as counterparts allowing the first food utensil (1, 1', 1") and the second food utensil (2, 2') to be attached to each other for obtaining a pair of tongs and allowing the first food utensil and the second food utensil to be detached from each other in order to be used separately from each other,
the first first food utensil (1, 1', 1") comprises a hole extending through the first attachment section (5), and
the second attachment section (6) of the second food utensil (2, 2') comprises a protrusion for allowing the first and second food utensils to be attached to each other by threading the protrusion through the hole, **characterized in that**
the hole has a predetermined width (W1), and
the protrusion has a width (W2) which substantially corresponds or is slightly larger than the predetermined width (W1) for allowing the first (1, 1', 1") and second (2, 2') food utensils to be attached to each other by elastic yielding in the material of the first and/or second attachment section.

2. The food utensils according to claim 1, wherein the handle (3) of the second food utensil (2, 2') comprises a shoulder (9) preventing other parts of the second food utensil than the protrusion from being threaded through the hole.

3. The food utensils according to one of claims 1 to 2, wherein the handle (3) of at least one of the first (1, 1', 1") and second (2, 2') food utensils is dimensioned to yield elastically until the contact surfaces (4, 4', 4") of the food utensils attached to each other as a pair of tongs come into contact with each other by a force (F) that a user can direct towards the handles (3) of the food utensils with one hand.

4. The food utensils according to one of claims 1 to 3, wherein the handle (3) of at least one of the first (1, 1', 1") and second (2, 2') food utensils is made of heat resistant plastic.

5. The food utensils according to one of claims 1 to 4, wherein at least one of the first (5) and second (6) attachment sections is symmetrically shaped for allowing the first food utensil (1, 1', 1") to be attached to the second food utensil (2, 2') in two different positions, such that the contact surfaces (4, 4', 4") of the first (1, 1', 1") and second (2, 2') food utensils face each other in the first position, and the contact surface (4, 4', 4") of one of the of the first (1, 1', 1") and second (2, 2') food utensils faces away from the other food utensil in the second position.

6. The food utensils according to one of claims 1 to 5, wherein
the handle (3) of at least one of the first (1, 1', 1") and second (2, 2') food utensils comprises a gripping section (10) between the first end and the second end of the handle,
an outer surface of the gripping section (10) is provided with a longitudinal groove (13), and
the longitudinal groove (13) is located on an opposite side of the food utensil as compared to the contact surface (4, 4', 4").

7. The food utensils according to one of claims 1 to 6, wherein the contact surface (4) of at least one of the first and second food utensils is generally concave.

8. The food utensils according to one of claims 1 to 7, wherein the contact surface (4') of at least one of the first and second food utensils is generally flat.

9. The food utensils according to one of claims 1 to 8, wherein the contact surface (4', 4") of at least one of the first and second food utensils is provided with holes extending through the food utensil.

10. The food utensils according to one of claims 1 to 9, wherein the contact surface (4") of at least one of the first and second food utensils is surrounded by toothed outer edges.
